# EUROPEAN PATENT SPECIFICATION

(11) **EP 1 143 675 B1**
(45) Date of publication and mention of the grant of the patent: **14.06.2006**
(21) Application number: 00107274.3
(22) Date of filing: 04.04.2000
(51) Int. Cl.: H04L 27/148

(54) **Method for demodulating frequency shift keying (FSK) signals and a FSK demodulator**
Verfahren zur Demodulation von frequenzumgetasteten (FSK-)Signalen und FSK-Demodulator
Procédé de démodulation de signaux modulés par déplacement de fréquence et démodulateur FSK

(43) Date of publication of application: 10.10.2001
(73) Proprietor: DEUTSCHE THOMSON-BRANDT GMBH, 78048 Villingen-Schwenningen (DE)
(72) Inventor: Schreiber, Ulrich, 30827 Garbsen (DE); Gao, Fei, 30449 Hannover (DE)
(74) Representative: Rittner, Karsten

(56) References cited:
- US-A- 5 287 516
- US-A- 5 818 296
- SOLIMAN S S ET AL: "PERFORMANCE OF CODED SYSTEMS OVER FADING DISPERSIVE CHANNELS" IEEE TRANSACTIONS ON COMMUNICATIONS,US,IEEE INC. NEW YORK, vol. 40, no. 1, 1992, pages 51-59, XP000274897 ISSN: 0090-6778
- AUSTIN M C: "WIDE-BAND FREQUENCY-SHIFT KEYED RECEIVER PERFORMANCE IN THE PRESENCE OF INTERSYMBOL INTERFERENCE" IEEE TRANSACTIONS ON COMMUNICATIONS,US,IEEE INC. NEW YORK, vol. COM-23, no. 4, April 1975 (1975-04), pages 453-458, XP000758852 ISSN: 0090-6778
- ZOLGHADR F ET AL: "DIGITAL MATCHED-CORRELATOR AUTOMATIC GAIN CONTROL SCHEME APPLICABLE TO MFSK MODEMS" IEE PROCEEDINGS I. SOLID- STATE & ELECTRON DEVICES,GB,INSTITUTION OF ELECTRICAL ENGINEERS. STEVENAGE, vol. 138, no. 2, 1 April 1991 (1991-04-01), pages 123-131, XP000225626 ISSN: 0956-3776

## Description

The invention relates to a method for demodulating Frequency Shift Keying (FSK) signals and a FSK demodulator for using said method, especially a digital automatic level controlled FSK demodulator for multimedia terminals and modems.

### Background

At present, the ITU-V.8 and part of V.21 are used as start procedures of data transmission over the general switched telephone network (GSTN). Typical applications are, for example, internet via analogue modem, low bit rate multimedia terminal as defined in ITU-T H.324 and H.323 standard. One kind of this low bit rate multimedia terminal is the videophone over GSTN, a typical application of H.324. In this case, a point-point-connection is used. First, normal dialling function is done by using a telephone, after connecting, two talkers have to decide whether they want to switch to data transmission mode, i.e. videophone mode. If they want to use videophone, then data transmission mode has to be set up because the videophone is working in digital mode. Without disconnecting the telephone line, one can use the joint menu signal (JM) to set up the videophone mode. JM is used in V.8 and is defined in V.21. A JM signal consists of a repetitive sequence of bits at 300 bit/s, two frequency modulated sinus waves (also called Frequency Shift Keying - FSK), representing symbols 1 and 0, respectively. For example, channel 0 uses 1180 Hz and 980 Hz sinus waves for symbol 1 and symbol 0, respectively. Unfortunately, the most modems work in analogue bypass mode and are not able to perform that kind of FSK demodulation without redialling. In addition, ITU-T requires that the demodulator should work at a signal level from -12 dBm to -48 dBm.

Another disadvantage of the typical FSK is the sensitivity of FSK signals.

The paper SOLIMAN S S ET AL: "PERFORMANCE OF CODED SYSTEMS OVER FADING DISPERSIVE CHANNELS" IEEE TRANSACTIONS ON COMMUNICATIONS,US,IEEE INC. NEW YORK, vol. 40, no. 1, 1992, pages 51-59, XP000274897 ISSN: 0090-6778 discloses an FSK demodulator comprising, in a separate branch for each desired frequency, a serial arrangement of a bandpass, a squarer, and an integrator over approximately the symbol time. The final tone detection is then achieved by selecting the largest output value of the branches.

### Invention

It is an object of the present invention to disclose an improved method for demodulation Frequency Shift Keying (FSK) signals.

According to one aspect of the invention a method for demodulation Frequency Shift Keying (FSK) signals is provided, the method comprising the following steps:
a) receiving an FSK input signal xₛ(n) in an automatic level control block;
b) rescaling said FSK input signal xₛ(n) in said automatic level control block to provide a rescaled signal x(n);
c) processing said rescaled signal x(n) in band pass filters to provide separated signals y_{bp1}(n) and y_{bp2}(n), each having a respective frequency;
d) processing said separated signals y_{bp1}(n) and y_{bp2}(n) in a respective RMS detector to provide signals yₗₑᵥ₁(n) and yₗₑᵥ₂(n) ; and
e) processing said signals yₗₑᵥ₁(n) and yₗₑᵥ₂(n) in a processing unit for tone detection.

According to another aspect of the invention an apparatus for demodulation Frequency Shift Keying (FSK) signals is provided, the apparatus comprising:
- automatic level controller means for receiving and rescaling a FSK input signal xₛ(n);
- first and second band pass filter means connected to said automatic level controller means for processing a rescaled signal x(n) from said automatic level controller means;
- first and second RMS detector means connected to said first and second band pass filter means, respectively, for processing separated signals y_{bp1}(n) and y_{bp2}(n) from said first and said second band pass filter means, respectively; and
- processing means for tone detection.

In general, the invention has the following advantages compared to known FSK demodulation procedures: First, an input signal level is controlled by means of an automatic level control to ensure that the signal has always a certain level, preferably higher than -48dBM. Level controlling may be performed by using a gain control algorithm. This means, the digital band pass filter may be realised with 16-bit coefficients. This also leads to an improvement in sensitivity. Second, it is faster and safer to separate by means of a narrow band pass filter, also in case of receiving a DTMF tone. Third, using a RMS detector instead of using a level detector decreases the noise influence. Finally, a flexible control algorithm which can easily be adapted to other applications, e.g. DTMF detection, may be used to decide whether the detection is wrong or correct.

In addition, average demodulation time can be decreased to about 90 ms.

### Drawings

Exemplary embodiments of the invention are illustrated in the drawings and are explained in more detail in the following description.

In the figures:
- Fig. 1: shows a Frequency Shift Keying (FSK) signal with 980 Hz and 1180 Hz sinus waves;
- Fig. 2: shows a block diagram of a digital automatic level controlled FSK demodulator;
- Fig. 3: shows an automatic level control unit;
- Fig. 4: shows a frequency response of a band pass filter with a center frequency of 980 Hz;
- Fig. 5: shows a frequency response of a band pass filter with a center frequency of 1180 Hz;
- Fig. 6: shows one biquad of a section Infinite Impulse Response (IIR) filter with four delay units;
- Fig. 7: shows a RMS detector;
- Fig. 8: shows a graphical representation of a total detection time;
- Fig. 9: shows a graphical representation of a difference of outputs of two RMS detectors;
- Fig. 10: shows a flow diagram for estimation, detection and decision of symbols 1 and 0; and
- Fig. 11: shows a test sequence.

### Exemplary embodiments

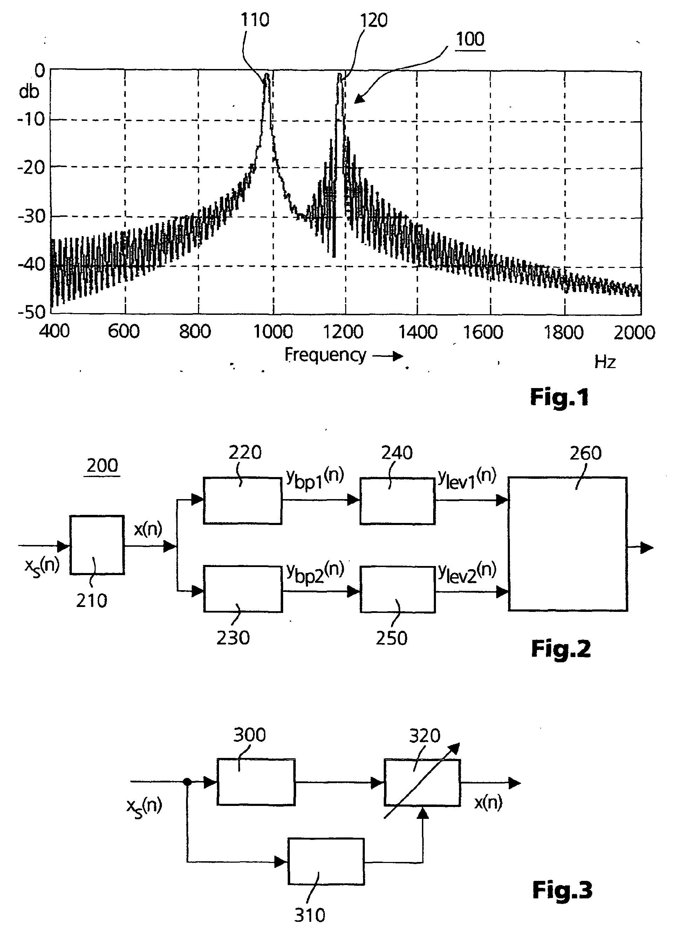

In Fig. 1 a FSK signal 100 with a spectrum is depicted. The FSK signal 1 comprises two sinus waves 110, 120 with a frequency of 980 Hz and 1180 Hz, respectively.

For the following description it is assumed that the FSK signal consists of 980 Hz and 1180 Hz. However, for other FSK signals with other frequencies only the coefficients of the band pass filter (pass band) need to be changed. In addition, as an example a block processing is chosen which doesn't affect the functionality and characteristics of the inventive method.

Fig. 2 shows a FSK demodulator 200 used to demodulate two symbols 1 and 0 with 980 Hz and 1180 Hz, respectively. First, an input signal xₛ(n) is fed into an automatic level control block 210. The automatic level control block 210 comprises a buffer or delay line 300, signal estimation means 310 and gain means 320, as shown in Fig. 3.

For each block of the input signal xₛ(n), for example about 30 ms second, a maximum of this block is searched, whereby the sign of the samples is neglected. In addition, the whole input block signal xₛ(n) is rescaled using an inverted maximum value, where it is assumed that the range of the input signal xₛ(n) is between -1.0 and 1.0. This means, the dynamic range of the input signal xₛ(n) is enlarged. The processing, shown in Fig. 3, is done in place so that only one buffer 300 is needed. Outputs of the automatic level control block 210 are rescaled pulse code modulated (PCM) samples x(n) (see Fig. 2 or 3).

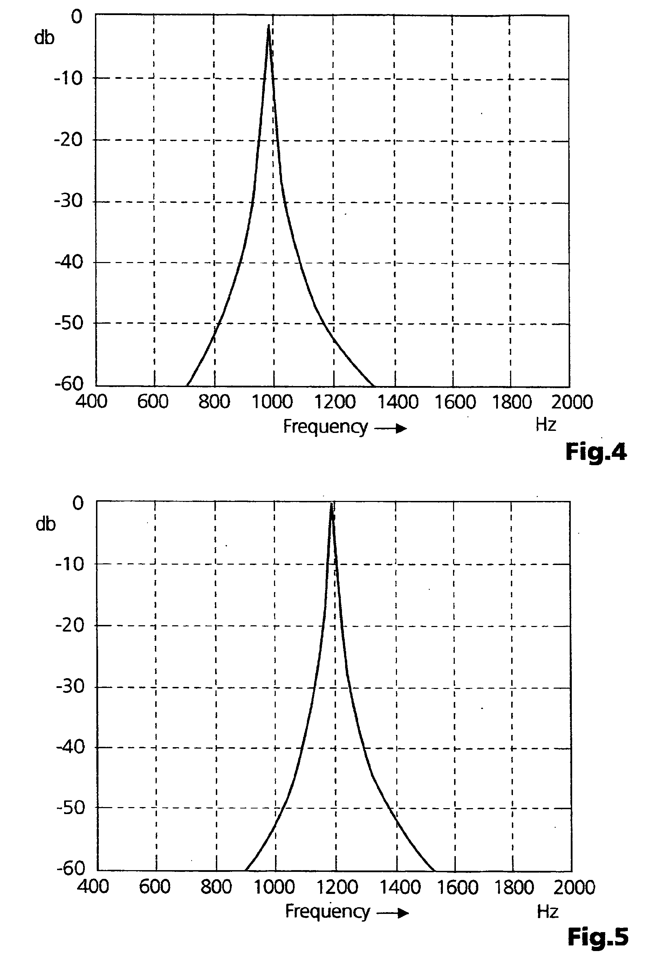

The rescaled PCM samples x(n) are put into band pass filters 220 and 230, as shown in Fig. 2. These band pass filters 220, 230 are special filters each having a very small pass band of about 20 Hz and a very sharp transit characteristic of about 26 dB per one third octave band, as shown in Fig. 4 and 5. For those skilled in the art it is obvious that for other FSK signals only the pass band frequencies need to be changed or adapted.

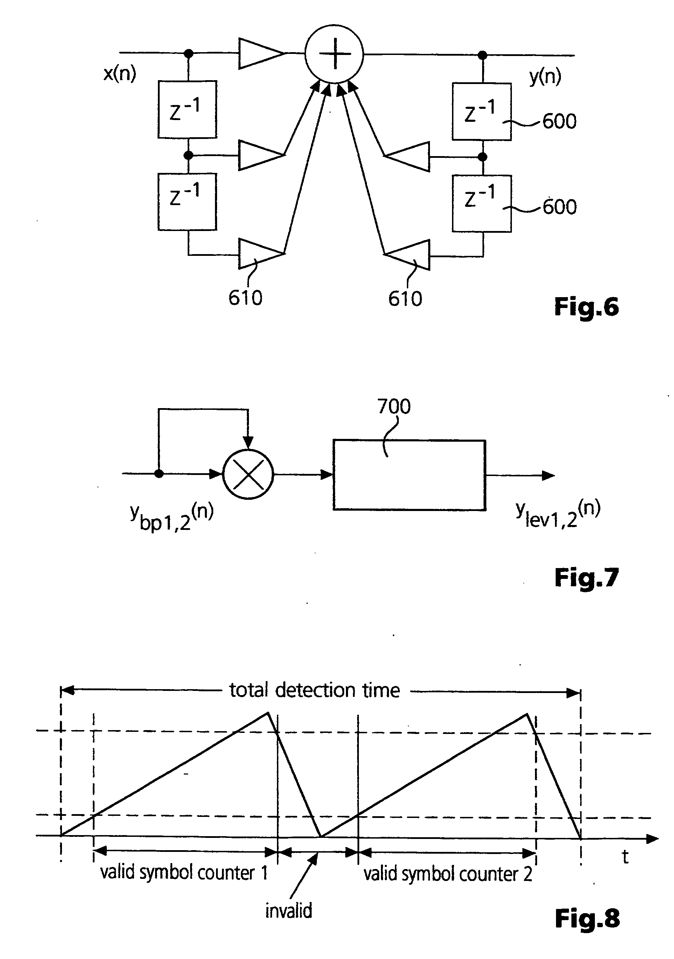

The band pass filters 220, 230 are realised as two second section Infinite Impulse Response (IIR) filters. An example of such a section is given in Fig. 6, whereby a Z⁻¹-block 600 represents a delay unit. Triangles 610 represent filter coefficients. An alternative implementation of one biquad IIR filter by using discrete Fourier Transform (Goetzel Algorithm) doesn't archive the same attenuation as the filter used in the present embodiment. To meet the same requirements as given in Fig. 4 and 5 by means of a standard finite impulse response filter 173 taps are needed.

Output of the band pass filters 220, 230 are two separated signals y_{bp1} and y_{bp2} with frequencies of 980 Hz and 1180 Hz, respectively (see Fig. 2). The separated signals y_{bp1} and y_{bp2} are fed into respective RMS detectors 240, 250 for performing a detection of the energy. In Fig. 7 an example of the RMS detectors 240, 250 is shown. A first order low pass filter 700 with a cut-off-frequency of 100 Hz is sufficient.

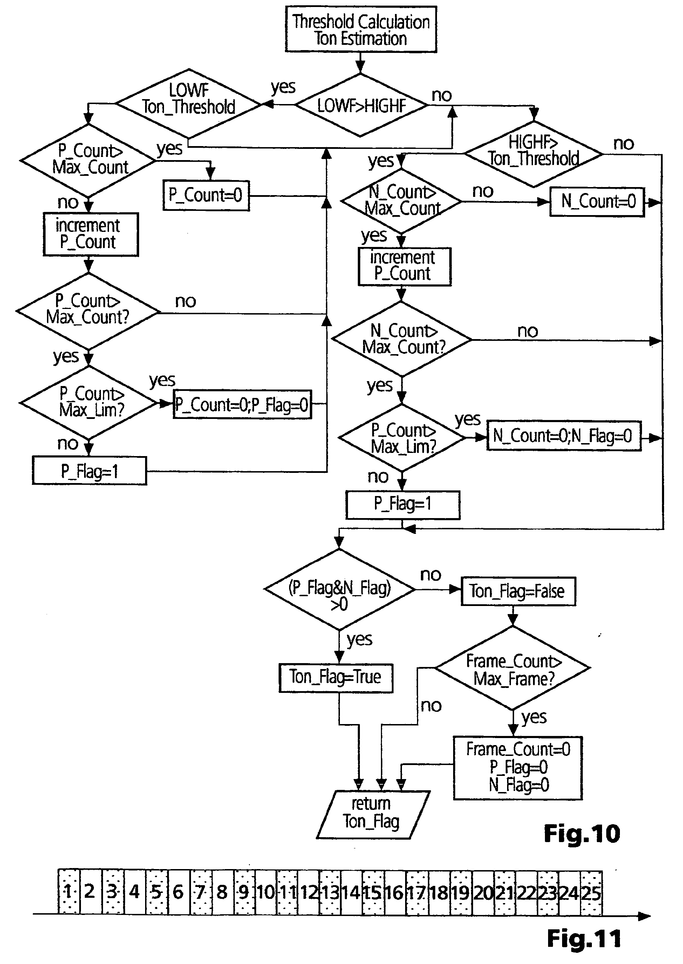

Output signals, yₗₑᵥ₁(n) and yₗₑᵥ₂(n), of the RMS detectors 240, 250 are fed into a processing unit 260 for detection, estimation and decision of symbols 1 or 0, also called a tone detection (a tone is sometimes referred to as sinus wave). The processing unit 260 is controlled according to a flow diagram given in Fig. 10. A symbol is successfully detected when the counter either 1 or 0 reaches a certain number. This is indicated in Fig. 8 where two counters are used (P_count and N_count in Fig. 10). The detection time can roughly result from the sum of both counter contents.

In Fig. 10 the following state variables are used: P_Flag for symbol "1", P_Count for symbol "1", N_Flag for symbol "0", N_Count for Symbol "0", Ton_Flag for detection and Frame_Counter for watching. For estimation, detection and decision with respect to symbols "1" and "0" values of constants were set to Max_Count = 100, Max_Lim = 240, Max_Frame = 6 and Ton_Threshold = 24 dB.

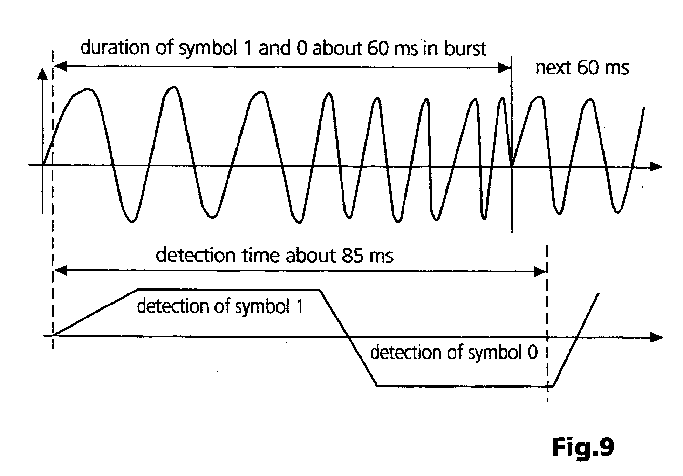

In Fig. 9 the difference between output signals yₗₑᵥ₁(n) and yₗₑᵥ₂(n) (see Fig. 2) and the corresponding input FSK signal are depicted. The two counters start to increase if yₗₑᵥ₁(n) or yₗₑᵥ₂(n) (see Fig. 2) exceed predefined thresholds (see Fig. 8). The final TON_FLAG is true if all criteria's are fulfilled. The whole demodulation is then finished.

To verify the new digital FSK demodulator an artificial test sequence (see Fig. 11) was defined. In table 1 the meaning of blocks 1 to 25 of the test sequence is depicted.

**Table 1**

| block number | comment |
|---|---|
| 1 | reference signals with 980 Hz as symbol 1 and 0, respectively, frequency shift keying sequence, duration of about 0,25 s |
| 2 | noise signal with the reference as in 1, duration of 0,5 s |
| 3 | speech signal with the reference as in 1, duration of 10 s |
| 4 | speech signal, duration of 10 s |
| 5 | DTMF tone signal, 941 Hz with 1209 Hz, duration of 0,25 s |
| 6 | reference signal mixed with DTMF tone signals, 941 Hz with 1209 Hz, duration of 0,5 s |
| 7 | DTMF tone signal mixed with noise and reference signal and speech signal, duration of 10 s |
| 8 | silent signal, zero input, duration of 5 s |
| 9-16 | repeat blocks 1-7 |
| 17 | silent as 8 |
| 18-25 | repeat blocks 1-7 |

The new digital FSK demodulator 200 was tested by using the test sequence. In addition, a real time implementation on a digital signal processor with two videophone demonstrators from different locations was tested. The proposed digital FSK demodulator worked very well.

## Claims

1. Method for demodulation Frequency Shift Keying (FSK) signals, the method comprising the following steps:
a) receiving an FSK input signal xₛ(n) in an automatic level control block (210);
b) rescaling said FSK input signal xₛ(n) in said automatic level control block (210) to provide a rescaled signal x(n);
c) processing said rescaled signal x(n) in band pass filters (220, 230) to provide separated signals y_{bp1}(n) and y_{bp2}(n), each having a respective frequency;
d) processing said separated signals y_{bp1}(n) and y_{bp2}(n) in a respective RMS detector (240, 250) to provide signals yₗₑᵥ₁(n) and yₗₑᵥ₂(n); and
e) processing said signals yₗₑᵥ₁(n) and yₗₑᵥ₂(n) in a processing unit (260) for tone detection.

2. Method according to claim 1, wherein said FSK signal xₛ(n) is rescaled in said automatic level control block (210) by using inverted maximum value.

3. Method according to claim 1 or 2, wherein said FSK input signal xₛ(n) in said step b) is converted to a range from -1 to 1 to enlarge a dynamic range of said FSK input signal xₛ(n).

4. Method according to at least one of the preceding claims, wherein said step e) for tone detection comprises a step for threshold estimation.

5. Method according to at least one of the preceding claims, whereby said rescaling according to step b), said processing according to said steps c) to e) is adapted to frequencies of said FSK input signal xₛ(n).

6. Apparatus (200) for demodulation Frequency Shift Keying (FSK) signals using the method according to any of the claims 1 to 5, the apparatus comprising:
- automatic level controller means (210) for receiving and rescaling a FSK input signal xₛ(n);
- first and second band pass filter means (220, 230) connected to said automatic level controller means (210) for processing a rescaled signal x(n) from said automatic level controller means (210);
- first and second RMS detector means (240, 250) connected to said first and second band pass filter means (220, 230), respectively, for processing separated signals y_{bp1}(n) and y_{bp2}(n) from said first and second band pass filter means (220, 230), respectively; and
- processing means (260) for tone detection.

7. Apparatus according to claim 6, **characterised in that**, said first and second band pass filter means (220, 230) are configured to have each a small pass band.

8. Apparatus according to claim 7, **characterised in that**, said first and second band pass filter means (220, 230) each having a pass band of about 20 Hz.

9. Apparatus according to at least one of the claims 6 to 8, wherein said first and second band pass filter means (220, 230) are configured to have each a sharp transit character.

10. Apparatus according to claim 9, **characterised in that**, said first and second band pass filter means (220, 230) each having a transit character of about 26 dB.

11. Apparatus according to at least one of the claims 6 to 10, wherein said first and second band pass filter means (220, 230) are a first and a second section Infinite Impulse Response (IIR) filter, respectively.

12. Apparatus according to at least one of the claims 6 to 11, wherein said first and second band pass filter means (220, 230) are implemented with 16-bit coefficients.

13. Apparatus according to at least one of the claims 6 to 12, wherein said first and second RMS detector means (240, 250) are a first and a second first order low pass filter 700, respectively, with a cut-off-frequency of about 100 Hz.

14. Apparatus according to at least one of the claims 6 to 13, wherein said automatic level controller means (210) comprises buffer means (300), signal estimation means (310) and gain means (320).

## Patentansprüche

1. Verfahren zur Demodulation frequenzumgetasteter-(FSK)-Signale, umfassend die folgenden Schritte:
a) Empfangen eines FSK-Eingangssignals xₛ(n) in einem Block (210) zur automatischen Pegelregelung;
b) Neu-Skalieren des FSK-Eingangssignals xₛ(n) in dem Block (210) zur automatischen Pegelregelung, um ein neu skaliertes Signal x(n) zu erzeugen;
c) Verarbeiten des neu skalierten Signals x(n) in Bandpassfiltern (220, 230), um getrennte Signale y_{bp1}(n) und y_{bp2}(n) zu erzeugen, die jeweils eine entsprechende Frequenz haben;
d) Verarbeiten der getrennten Signale y_{bp1}(n) und y_{bp2}(n) in einem entsprechenden RMS-Detektor (240, 250), um Signale yₗₑᵥ₁(n) und yₗₑᵥ₂(n) zu erzeugen; und
e) Verarbeiten der Signale yₗₑᵥ₁(n) und yₗₑᵥ₂(n) in einer Verarbeitungseinheit (260) zur Tondetektierung.

2. Verfahren nach Anspruch 1, bei dem das FSK-Eingangssignal xₛ(n) in dem Block (210) zur automatischen Pegelregelung durch Verwendung eines invertierten maximalen Wertes neu skaliert wird.

3. Verfahren nach Anspruch 1 oder 2, bei dem das FSK-Eingangssignal xₛ(n) beim Schritt b) in einen Bereich von -1 bis 1 umgewandelt wird, um den Dynamikbereich des FSK-Eingangssignals xₛ(n) zu vergrößern.

4. Verfahren nach wenigstens einem der vorhergehenden Ansprüche, bei dem der Schritt e) zur Tondetektierung einen Schritt zur Schwellwert-Abschätzung umfasst.

5. Verfahren nach wenigstens einem der vorhergehenden Ansprüche, bei dem die Neu-Skalierung gemäß dem Schritt b), die Verarbeitung gemäß den Schritten c) bis e) an Frequenzen des FSK-Eingangssignals xₛ(n) angepasst wird.

6. Vorrichtung (200) zur Demodulation frequenzumgetasteter-(FKS)-Signale unter Verwendung des Verfahrens nach einem der Ansprüche 1 bis 5, umfassend:
- Mittel (210) zur automatischen Pegelregelung, um ein FSK-Eingangssignal xₛ(n) zu empfangen und neu zu skalieren;
- Erste und zweite Bandpassfiltermittel (220, 230), die mit den Mitteln (210) zur automatischen Pegelregelung verbunden sind, um ein neu skaliertes Signal x(n) von den Mitteln (210) zur automatischenm Pegelregelung zu verarbeiten;
- Erste und zweite RMS-Detektormittel (240, 250), die mit den ersten bzw. zweiten Bandpassfiltermitteln (220, 230) verbunden sind, um getrennte Signale y_{bp1}(n) und y_{bp2}(n) von den ersten und zweiten Bandpassfiltermitteln (220 bzw. 230) zu verarbeiten; und
- Verarbeitungsmittel (260) zur Tondetektierung.

7. Vorrichtung nach Anspruch 6, **dadurch gekennzeichnet, dass** die ersten und zweiten Bandpassfiltermittel (220, 230) so gestaltet sind, dass sie jeweils einen schmalen Durchlassbereich haben.

8. Vorrichtung nach Anspruch 7, **dadurch gekennzeichnet, dass** die ersten und zweiten Bandpassfiltermittel (220, 230) jeweils einen Durchlassbereich von etwa 20 Hz haben.

9. Vorrichtung nach einem der Ansprüche 6 bis 8, bei dem die ersten und zweiten Bandpassfiltermittel (220, 230) so gestaltet sind, dass sie jeweils eine scharfe Transiteigenschaft haben.

10. Vorrichtung nach Anspruch 9, **dadurch gekennzeichnet, dass** die ersten und zweiten Bandpassfiltermittel (220, 230) jeweils eine Transiteigenschaft von etwa 26 dB haben.

11. Vorrichtung nach wenigstens einem der Ansprüche 6 bis 10, bei der die ersten und zweiten Bandpassfiltermittel (220, 230) erste bzw. zweite Filter mit unendlicher Impulsantwort (IIR) sind.

12. Vorrichtung nach wenigstens einem der Ansprüche 6 bis 11, bei der die ersten und zweiten Bandpassfiltermittel (220, 230) mit 16-Bit-Koeffizienten ausgeführt sind.

13. Vorrichtung nach wenigstens einem der Ansprüche 6 bis 12, bei der die ersten und zweiten RMS-Detektormittel (240, 250) ein Tiefpassfilter erster bzw. zweiter Ordnung (700) mit einer Grenzfrequenz von etwa 100 Hz ist.

14. Vorrichtung nach wenigstens einem der Ansprüche 6 bis 13, bei der die Mittel (210) zur automatischen Pegelregelung Puffermittel (300), Signal-Abschätzungsmittel (310) und Verstärkungsmittel (320) umfassen.

## Revendications

1. Procédé de démodulation de signaux modulés par déplacement de fréquence, lequel procédé comprend les étapes suivantes :
a) réception d'un signal d'entrée FSK xₛ(n) dans ledit bloc de contrôle de niveau automatique (210) ;
b) mise à l'échelle dudit signal d'entrée FSK xₛ(n) dans ledit bloc de contrôle de niveau automatique (210) permettant de fournir un signal mis à l'échelle x(n);
c) traitement dudit signal mis à l'échelle x(n) dans les filtres passe-bande (220, 230) permettant de fournir les signaux distincts y_{bp1}(n) et y_{bp2}(n), chacun ayant une fréquence propre ;
d) traitement individuel desdits signaux distincts y_{bp1}(n) et y_{bp2}(n) dans un détecteur RMS (240, 250) permettant de fournir les signaux yₗₑᵥ₁(n) et yₗₑᵥ₂(n) ; et
e) traitement desdits signaux yₗₑᵥ₁(n) et Yₗₑᵥ₂(n) dans une unité de traitement (260) pour la détection de tonalité.

2. Procédé selon la revendication 1, où ledit signal FSK xₛ(n) est mis à l'échelle dans ledit bloc de contrôle de niveau automatique (210) à l'aide d'une valeur maximale inversée.

3. Procédé selon la revendication 1 ou 2, où ledit signal d'entrée FSK xₛ(n) dans ladite étape b) est converti dans une plage de -1 à 1 permettant d'élargir une plage dynamique dudit signal d'entrée FSK xₛ(n).

4. Procédé selon au moins une des revendications précédentes, où ladite étape e) de détection de tonalité comprend une étape d'évaluation du seuil.

5. Procédé selon au moins une des revendications précédentes, où ladite mise à l'échelle selon l'étape b), ledit traitement selon lesdites étapes c) à e) sont adaptés aux fréquences dudit signal d'entrée FSK xₛ(n).

6. Appareil (200) de démodulation de signaux modulés par déplacement de fréquence utilisant le procédé selon une des revendications 1 à 5, lequel appareil comprend :
- un contrôleur de niveau automatique (210) pour la réception et la mise à l'échelle d'un signal d'entrée FSK xₛ(n) ;
- un premier et un second filtres passe-bande (220, 230) connectés au dit contrôleur de niveau automatique (210) pour le traitement d'un signal mis à l'échelle x(n) par ledit contrôleur de niveau automatique (210) ;
- un premier et un second détecteurs RMS (240, 250) connectés aux dits premier et second filtres passe-bande (220, 230), respectivement, pour le traitement des signaux distincts y_{bp1}(n) et y_{bp2}(n) sortant desdits premier et second filtres passe-bande (220, 230), respectivement ; et
- un moyen de traitement (260) pour la détection de tonalité.

7. Appareil selon la revendication 6, **caractérisé en ce que**, lesdits premier et second filtres passe-bande (220, 230) sont configurés de sorte à avoir une bande passante étroite.

8. Appareil selon la revendication 7, **caractérisé en ce que**, lesdits premier et second filtres passe-bande (220, 230) ont chacun une bande passante de 20 Hz.

9. Appareil selon au moins une des revendications 6 à 8, où lesdits premier et second filtres passe-bande (220, 230) sont configurés de telle sorte à avoir un caractère de transmission aigu.

10. Appareil selon la revendication 9, **caractérisé en ce que**, lesdits premier et second filtres passe-bande (220, 230) ont chacun un caractère de transmission d'environ 26 dB.

11. Appareil selon au moins une des revendications 6 à 10, où lesdits premier et second filtres passe-bande (220, 230) sont, respectivement, un premier et un second filtres récursifs (IIR).

12. Appareil selon au moins une des revendications 6 à 11, où lesdits premier et second filtres passe-bande (220, 230) sont implémentés avec des coefficients de 16 bits.

13. Appareil selon au moins une des revendications 6 à 12, où lesdits premier et second détecteurs RMS (240, 250) sont, respectivement, un premier et un second filtres passe-bas du premier ordre 700avec une fréquence de coupure d'environ 100 Hz.

14. Appareil selon au moins une des revendications 6 à 13, où ledit contrôleur de niveau automatique (210) comprend une mémoire tampon (300), un moyen d'évaluation des signaux (310) et un dispositif de gain (320).
